# DEMANDE DE BREVET EUROPEEN

(11) **EP 1 471 036 A1**
(43) Date de publication de la demande: **27.10.2004**
(21) Numéro de dépôt: 04290990.3
(22) Date de dépôt: 13.04.2004
(51) Int. Cl.: C01B 37/00

(54) **Solide cristallise IM-8 de type metallaphosphate et son procede de preparation**

(30) Priorité: 24.04.2003 FR 0305208
(71) Demandeur: Institut Français du Pétrole, 92852 Rueil-Malmaison Cedex (FR)
(72) Inventeur: Josien, Ludovic, 68 200 Mulhouse (FR); Simon-Massron, Angélique, 68350 Brunstatt (FR); Patarin, Joel, 68720 Flaxlanden (FR); Rouleau, Loic, 69390 Charly (FR)

(57) **Abrégé**

L'invention concerne un solide cristallisé de type métallophosphate, désigné sous l'appellation IM-8, lequel présente un diagramme de diffraction de rayons X tel que donné ci-dessous. Ce solide de type métallophosphate peut être partiellement substitué par un élément X et éventuellement par un élément Y. Ledit métallophosphate présente une composition chimique, exprimée sur une base anhydre, définie par la formule Rₛ(G_{g}PₚXₓY_{y})O₂, où G représente un ou plusieurs élément(s) tnvalent(s), R représente un ou plusieurs composé(s) organique(s), X représente un ou plusieurs élément(s) divalent(s), Y représente un ou plusieurs élément(s) tétravalent(s), et dans laquelle s ≤ 0,2, g ≤ 0,5, p ≤ 0,5, x ≤ 0,4, y ≤ 0,3 avec g + p + x + y = 1.

## Description

L'invention se rapporte à un nouveau solide cristallisé de type métallophosphate, appelé ci-après solide IM-8, présentant une nouvelle structure cristalline, et au procédé de préparation dudit solide IM-8.

Les solides microporeux cristallisés sont connus depuis de nombreuses années. On trouve essentiellement parmi ceux-ci deux familles: les zéolithes (aluminosilicates cristallisés) et les solides apparentés de type métallophosphate. Au début des années 1980, les premiers métallophosphates synthétisés furent des aluminophosphates (US-4,310,440). Dans ces composés, les éléments de charpente et notamment l'aluminium peuvent être partiellement substitués par d'autres éléments tel que le silicium (US-4,440,871) ou des métaux de transition (M. Hartmann, L. Kevan, Chem. Rev., 1999, 99, 635). Ces phosphates microporeux possèdent des propriétés d'échange d'ions ainsi que de catalyseur acide dans diverses réactions chimiques. L'utilisation de gallium en remplacement de l'aluminium dans les synthèses a permis de réaliser des phosphates de gallium microporeux encore appelés gallophosphates (EP-A-0 226 219 ; US-5,420,279 par exemple). Plus récemment, d'autres métallophosphates furent découverts : le métal constitutif de la charpente peut notamment être le zinc, le fer, le vanadium, le nickel etc... (A.K. Cheetham, G. Férey, T. Loiseau, Angew. Chem. Int. Ed., 1999, 38, 3268). Comme les aluminophosphates, les gallophosphates peuvent être partiellement substitués par des métaux de transition (P. Feng, X. Bu, G.D. Stucky, Nature,1997, 388, 735) et peuvent ainsi présenter des propriétés d'échange d'ions et d'acidité. Parmi ces gallophosphates substitués, certains possèdent des structures de type zéolithique. D'autres structures zéolithiques originales telles que les types structuraux CGF (CoGaPO-5) (A.M. Chippindale, A.R. Cowley, Zeolites, 1997,18,176), CGS (CoGaPO-6) (A.R. Cowley, A.M. Chippindale, Microporous Mesoporous Mater., 1999, 28, 163), SBS (UCSB-6) et SBT (UCSB-10) (X. Bu, P. Feng, G.D. Stucky, Science, 1997, 278, 2080) ont également été découvertes. La plupart de ces gallophosphates substitués ont été synthétisés en milieu quasi non aqueux en présence d'un solvant organique tel que l'éthylène glycol (A.M. Chippindale, A.R. Cowley, Microporous Mesoporous Mater., 1998, 21, 271). De façon générale, les métallophosphates s'obtiennent habituellement par cristallisation hydro- ou organothermale d'un mélange réactionnel comprenant une source d'anion phosphate, généralement l'acide orthophosphorique, une source du métal requis, généralement un oxyde, un carbonate, un ester ou un éther de ce métal, un agent structurant, en particulier une amine, un cation ammonium ou un cation des groupes IA et IIA, éventuellement un agent mobilisateur, par exemple l'anion fluorure ou hydroxyle, et un solvant (eau ou solvant organique).

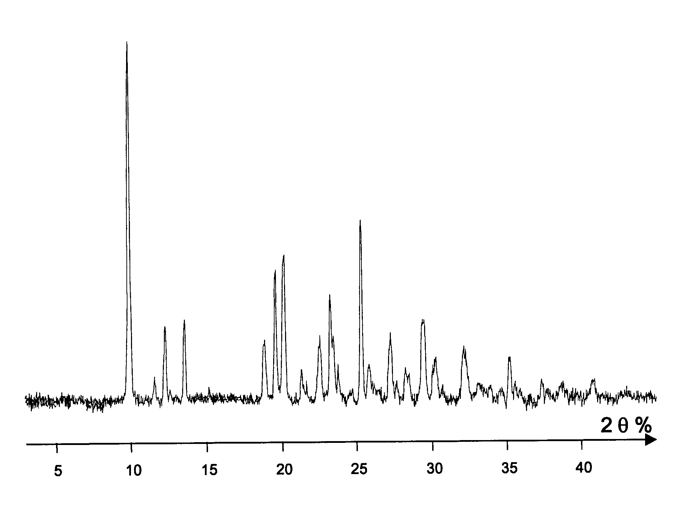

La présente invention se rapporte à un nouveau solide cristallisé de type métallophosphate, appelé solide cristallisé IM-8, et présentant sous sa forme brute de synthèse un diagramme de diffraction de rayons X incluant au moins les raies inscrites dans le tableau 1. Ce diagramme est donné sur la figure 1. Ce nouveau solide cristallisé IM-8 de type métallophosphate présente une nouvelle structure cristalline.

Ce diagramme de diffraction est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'estimation de l'erreur de mesure Δ(dₕₖₗ) sur dₕₖₗ se calcule par la relation de Bragg en fonction de l'erreur absolue Δ(2θ) affectée à la mesure de 2θ. Une erreur absolue Δ(2θ) égale à ± 0,2° est communément admise. L'intensité relative Iᵣₑₗ affectée à chaque valeur de dₕₖₗ est mesurée d'après la hauteur du pic de diffraction correspondant. Le diagramme de diffraction des rayons X du solide cristallisé IM-8 selon l'invention comporte au moins les raies aux valeurs de dₕₖₗ données dans le tableau 1. Dans la colonne des dₕₖₗ, on a indiqué les valeurs moyennes des distances inter-réticulaires en Angströms (Å). Chacune de ces valeurs doit être affectée de l'erreur de mesure Δ(dₕₖₗ) comprise entre ± 0,2Å et ± 0,008Å.

**TABLEAU 1**

| Valeurs moyennes des dₕₖₗ et intensités relatives mesurées sur un diagramme de diffraction des rayons X du solide cristallisé IM-8 de l'invention | | | | | |
|---|---|---|---|---|---|
| **d**_{**hkl**}**(Å)** | **2θ (degrés)** | **I/I0** | **d**_{**hkl**}**(Å)** | **2θ (degrés)** | **I/I0** |
| 8,93 | 9,89 | FF | 3,159 | 28,23 | ff |
| 7,65 | 11,55 | ff | 3,133 | 28,46 | ff |
| 7,21 | 12,26 | f | 3,035 | 29,40 | f |
| 7,03 | 12,59 | ff | 2,971 | 30,05 | ff |
| 6,53 | 13,55 | f | 2,953 | 30,24 | f |
| 4,71 | 18,84 | f | 2,908 | 30,72 | ff |
| 4,53 | 19,58 | mf | 2,784 | 32,12 | f |
| 4,41 | 20,13 | mf | 2,769 | 32,30 | ff |
| 4,17 | 21,30 | ff | 2,706 | 33,07 | ff |
| 4,10 | 21,64 | ff | 2,641 | 33,91 | ff |
| 3,944 | 22,53 | f | 2,588 | 34,63 | ff |
| 3,825 | 23,24 | mf | 2,548 | 35,19 | ff |
| 3,795 | 23,42 | f | 2,524 | 35,54 | ff |
| 3,744 | 23,75 | ff | 2,502 | 35,86 | ff |
| 3,624 | 24,54 | ff | 2,407 | 37,32 | ff |
| 3,518 | 25,29 | m | 2,382 | 37,73 | ff |
| 3,449 | 25,81 | ff | 2,329 | 38,63 | ff |
| 3,270 | 27,25 | f | 2,220 | 40,61 | ff |
| 3,223 | 27,66 | ff | 2,211 | 40,78 | ff |
| où FF = très fort ; F = fort ; m = moyen ; mf = moyen faible ; f = faible ; ff = très faible. | | | | | |

L'intensité relative I/I₀ est donnée en rapport à une échelle d'intensité relative où il est attribué une valeur de 100 à la raie la plus intense du diagramme de diffraction des RX: ff <15 ; 15≤f<30 ; 30≤mf<50 ; 50 ≤m<65 ; 65≤F< 85 ; FF≥85.

De manière préférée, le solide cristallisé IM-8 de type métallophosphate est un gallophosphate.

Selon un mode de réalisation préféré de l'invention, le métal constitutif de la charpente cristalline du solide IM-8 de type métallophosphate est partiellement substitué par un ou plusieurs élément(s) chimique(s) de nature différente. Le métallophosphate selon l'invention, substitué ou non, présente, sous sa forme brute de synthèse, une composition chimique, exprimée sur une base anhydre, définie par la formule générale suivante: Rₛ (G_{g}PₚXₓY_{y}) O₂ (I), où G représente un ou plusieurs élément(s) trivalent(s), R représente un ou plusieurs composé(s) organique(s), X représente un ou plusieurs élément(s) divalent(s), Y représente un ou plusieurs élément(s) tétravalent(s). Dans la formule (I), g, s, p, x et y représentent les nombres de moles de chacun des éléments G, R, P, X et Y pour deux moles d'atomes oxygène et leurs valeurs sont telles que s est inférieur ou égal à 0,2, g est inférieur ou égal 0,5, p est inférieur ou égal à 0,5, x est inférieur ou égal à 0,4 et y est inférieur ou égal à 0,3 avec g + p + x + y = 1. De préférence, s est compris entre 0,06 et 0,17, g est compris entre 0,2 et 0,4, p est compris entre 0,4 et 0,5, x est compris entre 0,1 et 0,3 et y est compris entre 0 et 0,1 et de manière encore plus préférée y est compris entre 0 et 0,085.

Le métallophosphate partiellement substitué, sous sa forme brute de synthèse, présente une structure cristalline donnant un diagramme de diffraction de rayons X similaire à celui donné par la structure cristalline de l'IM-8 (figure 1) et incluant au moins les mêmes raies que celles inscrites dans le tableau 1. Des différences peu significatives peuvent éventuellement être observées par rapport aux valeurs moyennes dₕₖₗ et aux intensités relatives I/I₀ données dans le tableau 1 en raison de la nature et de la quantité des éléments G, X, Y ou R présents dans le solide.

Selon ce mode de réalisation de l'invention dans lequel le solide cristallisé IM-8 est un métallophosphate partiellement substitué, G est de préférence choisi parmi les éléments du groupe IIIA de la classification périodique des éléments, et de préférence choisi parmi le bore, l'aluminium, le gallium et le mélange d'au moins deux de ces éléments. De manière préférée, G est l'aluminium et/ou le gallium. De manière très préférée, G est le gallium. L'élément X est de préférence choisi parmi les métaux compris dans le groupe constitué par le cobalt, le zinc, le manganèse, le cuivre, le nickel, le magnésium et le mélange d'au moins deux de ces métaux. De manière très préférée, l'élément X est le cobalt. L'élément Y est de préférence choisi parmi le silicium, le germanium, le titane et le mélange d'au moins deux de ces éléments. De manière très préférée, l'élément Y est le silicium. Une composition très préférée du solide cristallisé IM-8 selon l'invention est telle qu'elle comprenne du cobalt, du phosphore et du gallium. L'élément R, représentant un ou plusieurs composé(s) organique(s), peut être le structurant organique utilisé lors de la préparation du solide cristallisé IM-8, telle que décrite plus loin dans cette description. En général, l'élément R est une amine. En particulier il peut s'agir d'une amine cyclique et de préférence d'une alkylpipérazine. R est de préférence la 1,4-diméthylpipérazine, la 1-éthylpipérazine, la 1-méthylpipérazine ou ses précurseurs ou ses produits de décomposition.

Sous sa forme brute de synthèse, ledit solide cristallisé IM-8 de type métallophosphate ou métallophosphate substitué selon l'invention contient, occlus dans lesdits canaux, le structurant organique protoné utilisé lors de la synthèse ainsi qu'une certaine quantité d'eau d'hydratation. Ce structurant organique compense la charge négative de la charpente. La déshydratation dudit solide brut de synthèse, par chauffage jusqu'à 180°C environ, ne provoque pas en général le départ du structurant organique. Le structurant organique peut être éliminé par les voies classiques connues de l'état de la technique comme des traitements chimiques et/ou thermiques. Dans le cas d'un traitement thermique de la forme brute de synthèse, la température est en générale supérieure à 400°C et de préférence comprise entre 450°C et 550°C. Après traitement thermique, le solide obtenu contient du structurant organique en quantité bien moindre que dans le solide brut de synthèse, dans la mesure où le structurant organique est éliminé en majeure partie. De préférence, après traitement thermique, le solide obtenu ne contient plus de structurant organique.

L'invention concerne également le procédé de synthèse du solide cristallisé IM-8. Le solide cristallisé IM-8 de type métallophosphate selon l'invention s'obtient par cristallisation hydro- ou organothermale d'un mélange réactionnel comprenant une source d'anion phosphate, généralement l'acide orthophosphorique, une source du métal requis, de préférence une source du gallium, généralement sous la forme d'un oxyde, d'un carbonate, d'un ester ou d'un éther de ce métal, un agent structurant, en particulier une amine, un cation ammonium ou un cation des groupes IA et IIA, éventuellement un agent mobilisateur, par exemple l'anion fluorure ou hydroxyle, et un solvant (eau ou solvant organique). Plus précisément, le procédé consiste à préparer un mélange réactionnel appelé gel et renfermant un ou plusieurs solvants organiques hydroxylés tel que l'éthylène glycol ou le glycérol, une ou plusieurs source(s) de phosphore, une ou plusieurs source(s) de l'élément G, une ou plusieurs source(s) de l'élément X, éventuellement une ou plusieurs source(s) de l'élément Y et une ou plusieurs source(s) de l'élément R choisie(s) parmi les structurants organiques, de préférence les structurants organiques azotés, leurs précurseurs et leurs produits de décomposition. Ledit gel renferme éventuellement de l'eau. Les quantités desdits réactifs sont ajustées de manière à conférer à ce gel une composition permettant sa cristallisation en solide cristallisé IM-8 de formule Rₛ (G_{g}PₚXₓY_{y}) O₂, où R, G, X, Y et s, g, p, x, et y répondent aux critères définis plus haut. Puis le gel est soumis à un traitement hydrothermal jusqu'à ce que le solide cristallisé IM-8 se forme. Le gel est avantageusement mis sous conditions hydrothermales, à une température inférieure à 200°C, de préférence comprise entre 100 et 200°C et de manière encore plus préférée comprise entre 150 et 200°C, et sous une pression au moins égale à la pression autogène du mélange constitué par ledit gel, pendant une durée suffisante pour la formation du solide cristallisé IM-8. Le chauffage du gel est réalisé de préférence dans un autoclave et la cristallisation peut être opérée avec ou sans agitation. La durée nécessaire pour obtenir la cristallisation dépend de la composition du gel, en particulier de l'ajout de germes, de l'agitation et de la température de chauffage. Cette durée se situe généralement entre 1 et 30 jours et de préférence entre 5 et 20 jours. Lorsque la cristallisation est achevée, le solide est séparé des eaux-mères par centrifugation ou par filtration, puis lavé à l'eau déminéralisée, séché, modifié par des traitements thermiques et/ou chimiques, de manière à éliminer le structurant organique, et mis en forme selon les méthodes connues de l'Homme du métier. Ledit structurant organique peut être éliminé selon les méthodes classiques connues de l'état de la technique décrites précédemment.

De manière avantageuse, la composition molaire du gel est telle que :

| | |
|---|---|
| P₂O₅ | 0,25-4 |
| G₂O₃ | 0,05-3 |
| XO | 0,5-8 |
| YO₂ | 0-4 |
| R | 0,5-8 |
| H₂O | < 50 |
| Solvant (éthylène glycol, ...) | 10-1000 |

De manière encore plus avantageuse, la composition molaire du gel est telle que :

| | |
|---|---|
| P₂O₅ | 0,5-1,5 |
| G₂O₃ | 0,25-1 |
| XO | 1-3 |
| YO₂ | 0-2 |
| R | 1-3 |
| H₂O | < 20 |
| Solvant (éthylène glycol, ...) | 25-100 |

La source de phosphore la plus appropriée est l'acide orthophosphorique concentré, mais ses sels et esters comme les phosphates alcalins, les phosphates d'élément trivalent G réactifs et notamment les phosphates de gallium et les phosphates d'alkyle conviennent aussi.

La source de l'élément G est avantageusement choisie parmi les oxydes, oxyhydroxydes, hydroxydes ou alcoxydes de cet élément. Les sels de l'élément G, notamment chlorure, nitrate, sulfate sont également appropriés. On peut encore utiliser une source commune pour les éléments G et P tel qu'un gallophosphate. L'oxyhydroxyde de gallium est utilisé de préférence lorsque l'élément G est le gallium.

La source du métal X est avantageusement choisie parmi les sels, par exemple carbonate, chlorure, nitrate, sulfate, acétate, les hydroxydes, les oxydes et les alkoxydes. Quand l'élément X est le cobalt, l'acétate de cobalt est utilisé de préférence.

La source de l'élément Y peut être tout composé comprenant l'élément Y et pouvant libérer cet élément en solution aqueuse ou dans un solvant organique sous forme réactive. Avantageusement, lorsque l'élément Y est le silicium, il s'agit d'une silice en particulier un sol de silice, de la silice de combustion, de la silice précipitée, un alkoxyde de silicium. Une suspension de silice de combustion est employée de préférence.
Il est également avantageux d'additionner des germes au mélange réactionnel afin de réduire le temps nécessaire à la formation du solide cristallisé IM-8 selon l'invention, de favoriser sa formation au détriment des impuretés ou pour contrôler la taille des cristaux. De tels germes comprennent des solides cristallisés, notamment des cristaux ayant la structure du solide IM-8 selon l'invention. Les germes cristallins sont généralement ajoutés dans une proportion comprise entre 0,01 et 10 % du poids de phosphate de l'élément G utilisé dans le mélange réactionnel.

Le solide cristallisé IM-8 de type métallophosphate ou métallophosphate substitué selon l'invention peut être intéressant pour diverses applications, en particulier en tant qu'élément de catalyseur ou d'adsorbant en raffinage et en pétrochimie.

L'invention est illustrée par les exemples suivants donnés à titre non limitatif.

### Exemple 1 : Synthèse d'un composé gallophosphate substitué par Co de structure IM-8

On met en suspension 0,28 g d'oxyhydroxyde de gallium hydraté (GaOOH•xH₂O contenant environ 9% en masse d'eau) et 1,24 g d'acétate de cobalt tétrahydraté (Fluka) dans 7,70 g d'éthylène glycol (SDS). L'oxyhydroxyde de gallium est obtenu par évaporation d'une solution de nitrate de gallium sur banc de sable à une température de 250°C pendant 24 heures. On ajoute sous agitation 0,58 g d'acide orthophosphorique à 85% (Labosi) puis 0,50 g de N-méthylpipérazine (Aldrich) après 10 minutes d'agitation. Le milieu réactionnel ainsi formé, ayant la consistance d'un gel, est mûri sous agitation pendant une durée égale à environ 1 heure.
La composition molaire du gel (milieu réactionnel ainsi préparé, exprimé en oxyde et rapporté à 1 mole de P₂O₅) est la suivante:
0,5 Ga₂O₃ : 2 Co(CH₃CO₂)₂ : 1 P₂O₅ : 10 H₂O : 2 *N*-méthylpipérazine : 50 éthylène glycol
Le mélange réactionnel est transvasé dans un autoclave en acier muni d'une chemise en polytétrafluoroéthylène (PTFE) de 20cm³ puis est chauffé sans agitation à 180°C pendant une durée égale à 15 jours pour former un produit cristallisé. Après refroidissement, le solide cristallisé obtenu est lavé à l'eau déminéralisée puis soumis à un traitement aux ultrasons pendant une durée de quelques minutes. Après séchage à 60°C, on obtient une poudre constituant le solide cristallisé de structure IM-8. Les valeurs des angles 2θ des raies du diagramme de diffraction des rayons X de ce produit correspondent aux valeurs du tableau 1 et au diffractogramme représenté sur la figure I. L'analyse chimique du solide conduit à la formule exprimée en oxyde (TO₂, avec T= Ga, Co, P) suivante [(C₅H₁₂N₂)_{0,1}Ga_{0,3}P_{0,5}Co_{0,2}]O₂.

## Revendications

1. Solide cristallisé IM-8 de type métallophosphate présentant, sous sa forme brute de synthèse, un diagramme de diffraction de rayons X incluant au moins les raies inscrites dans le tableau ci-dessous :
| **d**_{**hkl**} **(Å)** | **2θ (degrés)** | **I/I0** | **d**_{**hkl**} **(Å)** | **2θ (degrés)** | **I/I0** |
|---|---|---|---|---|---|
| 8,93 | 9,89 | FF | 3,159 | 28,23 | ff |
| 7,65 | 11,55 | ff | 3,133 | 28,46 | ff |
| 7,21 | 12,26 | f | 3,035 | 29,40 | f |
| 7,03 | 12,59 | ff | 2,971 | 30,05 | ff |
| 6,53 | 13,55 | f | 2,953 | 30,24 | f |
| 4,71 | 18,84 | f | 2,908 | 30,72 | ff |
| 4,53 | 19,58 | mf | 2,784 | 32,12 | f |
| 4,41 | 20,13 | mf | 2,769 | 32,30 | ff |
| 4,17 | 21,30 | ff | 2,706 | 33,07 | ff |
| 4,10 | 21,64 | ff | 2,641 | 33,91 | ff |
| 3,944 | 22,53 | f | 2,588 | 34,63 | ff |
| 3,825 | 23,24 | mf | 2,548 | 35,19 | ff |
| 3,795 | 23,42 | f | 2,524 | 35,54 | ff |
| 3,744 | 23,75 | ff | 2,502 | 35,86 | ff |
| 3,624 | 24,54 | ff | 2,407 | 37,32 | ff |
| 3,518 | 25,29 | m | 2,382 | 37,73 | ff |
| 3,449 | 25,81 | ff | 2,329 | 38,63 | ff |
| 3,270 | 27,25 | f | 2,220 | 40,61 | ff |
| 3,223 | 27,66 | ff | 2,211 | 40,78 | ff |
où FF = très fort ; F = fort ; m = moyen ; mf = moyen faible ; f = faible ; ff = très faible, et présentant une composition chimique, exprimée sur une base anhydre, définie par la formule générale Rₛ(G_{g}PₚXₓY_{y}) O₂, dans laquelle G représente un ou plusieurs élément(s) trivalent(s), R représente un ou plusieurs composé(s) organique(s), X représente un ou plusieurs élément(s) divalent(s), Y représente un ou plusieurs élément(s) tétravalent(s) et dans laquelle s est inférieur ou égal à 0,2, g est inférieur ou égal 0,5, p est inférieur ou égal à 0,5, x est inférieur ou égal à 0,4 et y est inférieur ou égal à 0,3 avec g + p + x + y = 1.

2. Solide cristallisé IM-8 selon la revendication 1 tel que l'élément G est le gallium.

3. Solide cristallisé IM-8 selon la revendication 1 ou 2 tel que l'élément X est choisi parmi les métaux compris dans le groupe constitué par le cobalt, le zinc, le manganèse, le cuivre, le nickel, le magnésium et le mélange d'au moins deux de ces métaux.

4. Solide cristallisé IM-8 selon l'une des revendications 1 à 3 tel que l'élément Y est choisi parmi le silicium, le germanium, le titane et le mélange d'au moins deux de ces éléments.

5. Solide cristallisé IM-8 selon l'une des revendications 1 à 4 tel que l'élément R est une amine.

6. Solide cristallisé IM-8 selon la revendication 5 tel que l'élément R est une alkylpipérazine.

7. Solide cristallisé IM-8 selon l'une des revendications 1 à 6 tel qu'il comprend du cobalt, du gallium et du phosphore.

8. Procédé de préparation d'un solide cristallisé IM-8 selon l'une des revendications 1 à 7 consistant à procéder au mélange réactionnel d'une ou plusieurs source(s) de phosphore, d'une ou plusieurs source(s) de l'élément G, d'une ou plusieurs source(s) de l'élément X, éventuellement d'une ou plusieurs source(s) de l'élément Y, d'une ou plusieurs source(s) de l'élément R choisie(s) parmi les structurants organiques, leurs précurseurs et leurs produits de décomposition, d'un ou plusieurs solvant(s) organique(s) hydroxylé(s) puis à procéder au traitement hydrothermal dudit mélange jusqu'à ce que ledit solide cristallisé IM-8 cristallise.

9. Procédé de préparation selon la revendication 8 tel que la composition molaire du mélange réactionnel est telle que :
| | |
|---|---|
| P₂O₅ | 0,25-4 |
| G₂O₃ | 0,05-3 |
| XO | 0,5-8 |
| YO₂ | 0-4 |
| R | 0,5-8 |
| H₂O | < 50 |
| Solvant | 10-1000 |

10. Procédé selon la revendication 8 ou 9 tel que des germes sont additionnés dans le mélange réactionnel.
